Europäisches Patentamt

European Patent Office

Office européen des brevets

(11) Publication number: **0 066 353**
A1

(12) **EUROPEAN PATENT APPLICATION**

(21) Application number: **82301409.7**

(22) Date of filing: **18.03.82**

(51) Int. Cl.³: **A 01 K 97/10**

(30) Priority: **23.04.81 GB 8112599**

(43) Date of publication of application:
**08.12.82 Bulletin 82/49**

(84) Designated Contracting States:
**AT BE CH DE FR GB IT LI LU NL SE**

(71) Applicant: **Loveridge, Michael John
146c Croydon Road Penge
London S.E. 20(GB)**

(72) Inventor: **Loveridge, Michael John
146c Croydon Road Penge
London S.E. 20(GB)**

(74) Representative: **Jones, Graham H.
Graham Jones & Company 48 Mereworth Drive
Shooters Hill
London SE18 3EE(GB)**

(54) Rod rest.

⑦ A rod rest for use with a bank stick or tripod comprising two support rods 7, 8, each having a rod receiver end part 1, 2, the said rods 7, 8, being supported in a housing 12, adapted to receive the end of each support rod remote the rod receiver end part thereof, a coupling device 19, adjustably secured to the housing 12, for receving in use a bank stick or tripod 16, and locking means 23, 24, 25, which serves to lock the coupling device in position with respect to the housing 12, and which when unlocked permits adjustment of the angle between the housing 12 and the coupling device 19, whereby adjustment in use of the angle at which a fishing rod 3 is supported is facilitated.

FIG. 1.

EP 0 066 353 A1

ROD REST

This invention relates to rod rests for use in angling.

A rod rest is a support stand on which an angler places a fishing rod whilst waiting for a bite. The simplest type of rod rest amounts to a forked stick which is plunged into the waterside bank so that the forked end projects to serve as a support for the rod. Although a single rod rest is suitable for some fishing techniques, it may be desirable, especially when ledgering, to support the rod between two rod rests. When using two rod rests, the relative height of the two rests is adjusted in accordance with the depth to which they are plunged into the ground, whereby the angle of the rod with respect to the horizontal is adjustable.

According to the present invention a rod rest for use with a bank stick or tripod comprises, two support rods each having a rod receiver end part, the said rods being supported in a housing adapted to receive the end of each support rod remote the rod receiver end part thereof, a coupling device adjustably secured to the housing for receiving in use a bank stick or tripod, and locking means which serves to lock the coupling device in position with respect to the housing and which when unlocked permits adjustment of the angle between the housing and the coupling device whereby adjustment in use of the angle at which a fishing rod is supported is facilitated.

The coupling device for the bank stick or tripod may be adjustably secured to the housing by means of a universal joint with which the locking means is operatively associated.

The universal joint may be a ball and socket joint wherein the ball forms a part of the coupling device and the socket is secured to the housing.

'The locking means may be a clamp which is operative to clamp together the parts of the universal joint.

The clamp may be a screw clamp.

The support rods may be pivoted or hinged in the housing so that they may be closed to a mutually parallel position for storage or transport purposes and opened preparatory to use against a stop part formed in the housing.

A retaining clamp may be provided for holding the support rods in the storage position.

One or both of the support rods may be telescopically constructed and may include securing means whereby the telescopically related parts can be secured with respect to each other.

The rod receiver end parts of the support rods may be removable.

The support rods may have cranked end portions to which the rod receiver end parts are fitted in use.

The rod receiver end parts may comprise forked end parts.

The root of at least one forked end part may include a groove provided for receiving a fishing line when a fishing rod is supported in position on the rod rest.

One forked end part may be wider than the other to accommodate a fishing rod handle.

One of the rod receiver end parts may comprise an adapter to which may be fitted various designs of rod supporting device.

The housing may be adapted to receive between the support rods and juxtaposed to the coupling device a bite indicator.

The bite indicator may comprise two hinged parts one of which is arranged to fit securely to the housing and the other of which is arranged to extend substantially orthogonally and to receive in use a loop of line from a reel secured to a rod supported on the rod rest whereby a pull on the line due to a fish biting causes the line to tighten and the orthogonally extended part to lift until the line is released.

The said other part which in use receives the line may be a container.

A lid or cap of the container may include a line receiving groove.

The container may be provided with lead weights to provide a predetermined weight which must be lifted by a fish in use to provide a bite indication.

The screw clamp may be fitted with a knob which is adapted to receive the bite indicator.

The rod rest may include a bank stick or tripod for fitment to the coupling device.

One embodiment of the invention will now be described solely by way of example with reference to the accompanying drawings in which

Figure 1 is a front view of a rod rest on which a fishing rod is supported;

Figure 2 is an enlarged sectional view of a part of the rod rest shown in Figure 1;

Figure 3 is a front view partly in section of another part of the rod rest shown in Figure 1;

Figure 4 is a front view showing the rod rest shown in Figure 1 folded into a storage position together with various detachable parts; and

Figure 5 is a perspective view of a clamping device for fitment to the rod rest shown in Figure 4 to retain the positional relationship between the parts in a stored condition.

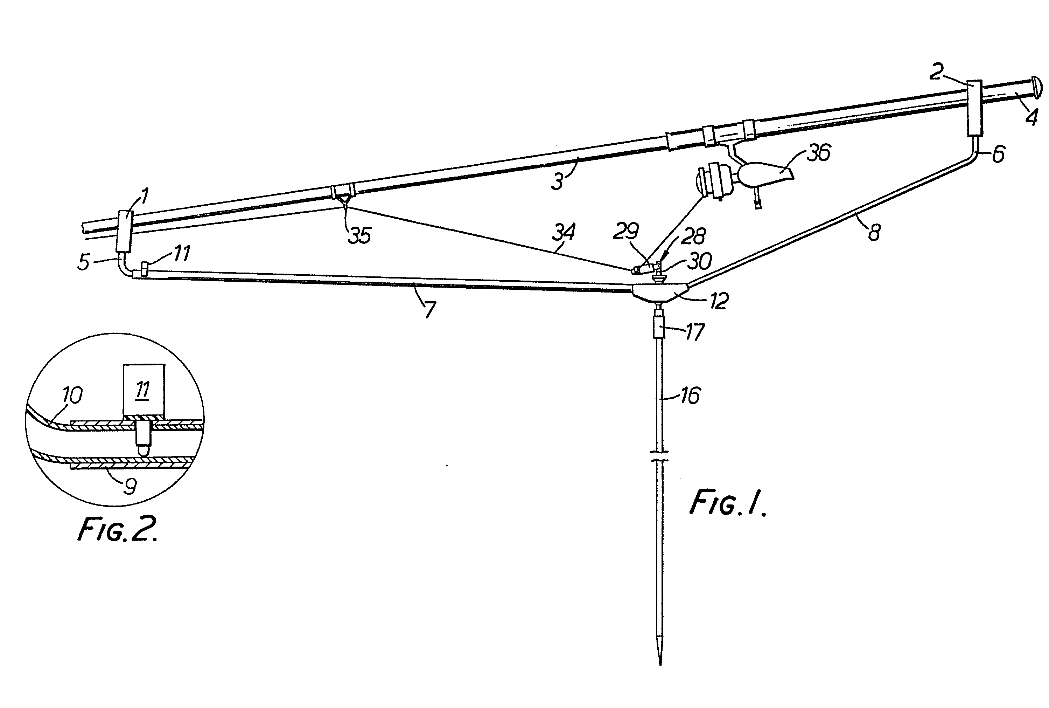

Referring now to Figure 1, a rod rest comprises a front forked part 1 and a rear forked part 2 between which a fishing rod 3 is supported with the thicker handle part 4 of the fishing rod being supported by the rear forked part 2. The forked parts 1 and 2 are fitted to cranked parts 5 and 6 of front and rear support rods 7 and 8 respectively. The front support rod 7 is telescopic and as shown in Figure 2 comprises an outer tube 9 within which an inner tube 10 bent to define the cranked part 5 is slidable. In order to secure the inner tube 10 with respect to the outer tube 9, holes in the tubes are aligned and a plastics poppet pin 11 is pushed through the aligned holes. In order to provide a degree of adjustment in steps, the inner tube 10 is provided with a number of holes spaced apart along its length whereby the inner tube may be telescopically extended and fixed in a number of different positions. It will be appreciated that in order to provide for telescopic adjustment it is necessary only to provide one hole in the outer tube 9 towards the end thereof.

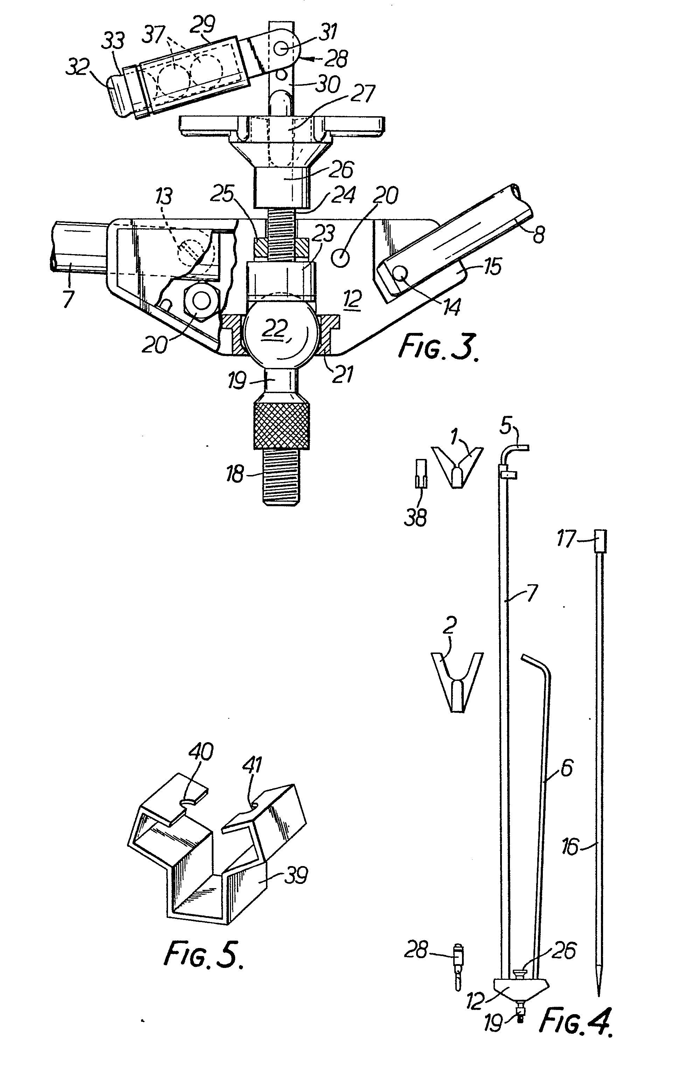

The front and rear support rods 7 and 8, are pivotally supported in a housing 12 on pivot pins 13 and 14 respectively. As can be seen from Figures 3 and 4, the front and rear support rods 7 and 8 can be pivoted on the pins 13 and 14 respectively, so as to assume a generally parallel position as shown in Figure 4 for storage purposes. When the support rods are deployed for use as shown in Figure 1, they abut against parts of the housing which act as stops, and as shown in Figure 3 a stop part 15 of the housing 12, serves to limit movement of the rear support rod 8 about the pivot pin 14.

A bank stick 16, having an internally threaded screw coupling 17 is shown in Figure 1, which fits to the complimentary threads 18 of a coupling device 19 which is fitted within the housing 12. The housing 12 is formed in two parts which are held together by nuts and bolts 20, the two parts defining between them a recess for a ball seat 21 within which a ball end 22 of the coupling device 19 is received. The ball end 22 and the ball seat 21 cooperate to provide a universal joint whereby the attitude of the support rods 7 and 8, and the body of the housing 12 may be adjusted with respect to the bank stick 16.

In order to provide a means of clamping the universal joint in position, a clamping pad 23 is provided having a concave end which fits over the ball end 22 of the coupling device 19. The clamping pad 23 is secured to a clamp screw 24 which co-operates with the complimentary screw threads of a clamping nut 25. A moulded plastics nob 26 is fitted to the end of the clamping screw 24 remote from the clamping pad 23, to facilitate manual tightening of the clamping pad 23 against the universal joint defined by the ball end 22 of the coupling device 19 and the ball seat 21. The knob 26 is provided with a recess 27 for accommodating a bite indicator 28 comprising two main parts 29 and 30 which are hinged about a pin 31. The part 30 is a tight push fit in the recess 27 in the knob 26 and the part 29 is a container which is closed by means of a lid 32 in which is formed a groove 33 to receive part of a fishing line 34 as shown in Figure 1. As shown in Figure 1, the line 34 is formed in use to define a loop between an end ring 35 on the rod 3 and a reel 36. When the line 34 is pulled by a fish, the part 29 of the bite indicator in constrained to move upwardly so as to hinge about the part 30. If the line 34 is pulled sufficiently, it will be appreciated that the part 29 will assume a near vertical position and the line 34 will be released from the groove 33.

In order to provide predetermined loading of the bite indicator 28, the container may be loaded with lead weights 37 shown in Figure 3.

Although the front forked part 1 may be suitable for most fishing purposes, in order to provide for the possibility of fitting other rod supporting devices to the rod rest, an adapter 38 is provided which can be fitted to the cranked end in 5 of the front support rod 7 and various rod supporting devices may then be fitted to the adapter 37 as will be appreciated by those skilled in the art.

In order to retain the rod rest in the folded position illustrated in Figure 4, a clamping device 39 may be provided as shown in Figure 5. The clamping device is made from somewhat springy or resilient material and has cut out portions 40 and 41 which are arranged to fit to the front and rear support rods 7 and 6 respectively.

It will be appreciated that the rod rest just before described may be sold with or without the bank stick 16 which is a standard item forming part of the equipment of many anglers. It will also be appreciated that for some applications the bank stick 16 may be replaced by a tripod.

A rod rest of the kind just before described has the important advantage that the angle at which a rod is supported relative to a bank stick or tripod may be very easily and simply adjusted. Various modifications may be made to the embodiment described without departing from the scope of the invention and for example both the front and rear support rods may be made telescopic and various alternative bite indicators may be fitted to the rod rest.

CLAIMS

1.  A rod rest for use with a bank stick or tripod comprising two support rods each having a rod receiver end part, the said rods being supported in a housing adapted to receive the end of each support rod remote the rod receiver end part thereof, a coupling device adjustably secured to the housing for receiving in use a bank stick or tripod, and locking means which serves to lock the coupling device in position with respect to the housing and which when unlocked permits adjustment of the angle between the housing and the coupling device whereby adjustment in use of the angle at which a fishing rod is supported is facilitated.

2.  A rod rest as claimed in claim 1 wherein the coupling device is adjustably secured to the housing by means of a universal joint with which the locking means is operatively associated.

3.  A rod rest as claimed in claim 2 wherein the universal joint is a ball and socket joint wherein the ball forms a part of the coupling device and the socket is secured to the housing.

4.  A rod rest as claimed in claim 3 wherein the locking means is a screw clamp which is operative to clamp together the parts of the ball and socket joint.

5.    A rod rest as claimed in any one of the preceding claims wherein the support rods are pivoted or hinged in the housing so that they can be closed to a mutually parallel position for storage or transport purposes and opened preparatory to use against a stop part formed in the housing.

6.    A rod rest as claimed in claim 5 comprising a retaining clamp for holding the support rods in the storage position.

7.    A rod rest as claimed in any one of the preceding claims wherein at least one of the support rods is telescopically constructed and includes securing means whereby the telescopically related parts can be secured with respect to each other.

8.    A rod rest as claimed in any one of the preceding claims wherein the support rods have cranked end portions to which the rod receiver end parts are fitted in use.

9.    A rod rest as claimed in any one of the preceding claims wherein the rod receiver end parts comprise forked end parts, wherein the root of one forked end part includes a groove provided for receiving a fishing line when a fishing rod is supported in position on the rod rest, and wherein the other forked end part is wider than the forked end part including the groove to accommodate a fishing rod handle.

10. A rod rest as claimed in any one of the preceding claims wherein the housing is provided with a bite indicator which is positioned between the support rods and juxtaposed to the coupling device, which bite indicator comprises two hinged parts, one of which is arranged to fit securely to the housing and the other part of which is arranged to extend substantially orthogonally and to receive in use a loop of line from a reel secured to a rod supported on the rod rest whereby a pull on the line due to a fish biting causes the line to tighten and the said other part to lift until the line is released, wherein the said other part of the bite indicator is a weight container having a lid or cap, and wherein the lid or cap has a line receiving groove.

FIG. 1.

FIG. 2.

0066353

2/2

FIG. 3.

FIG. 5.

FIG. 4.

0066353

**European Patent Office**

## EUROPEAN SEARCH REPORT

Application number

EP 82 30 1409

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. 3) |
| X | GB-A-2 015 851 (BAYBRIDGE PRESS TOOLS)<br>* the whole document * | 1-2,5, 7-10 | A 01 K 97/10 |
| X | US-A-1 619 152 (NUNLIST)<br><br>* the whole document * | 1-2,5, 8-9 | |
| A | US-A-1 789 509 (BERGSTROM)<br>* page 1, lines 49 to 59; figure 3 * | 2-4 | |
| A | US-A-2 465 565 (AGNER)<br>* the whole document * | 2-4 | |
| A | US-A-2 804 277 (KINDER)<br>* column 2, lines 46 to 57 * | 10 | TECHNICAL FIELDS SEARCHED (Int. Cl. 3) |
| A | US-A-3 140 069 (McBURNEY)<br>* column 2, lines 27 to 47; figures 5,6 * | 9 | A 01 K |

The present search report has been drawn up for all claims

| Place of search | Date of completion of the search | Examiner |
|---|---|---|
| THE HAGUE | 01-07-1982 | CRUCHTEN J.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82